# EUROPEAN PATENT SPECIFICATION

(11) **EP 2 158 780 B1**
(45) Date of publication and mention of the grant of the patent: **21.09.2011**
(21) Application number: 07730301.4
(22) Date of filing: 22.06.2007
(51) Int. Cl.: H04Q 1/00

(54) **ADDRESS PROVISIONING IN A MOBILE TELECOMMUNICATION SYSTEM**
ADRESSENBEREITSTELLUNG IN EINEM MOBILTELEKOMMUNIKATIONSSYSTEM
FOURNITURE D'ADRESSE DANS UN SYSTÈME DE TÉLÉCOMMUNICATION MOBILE

(43) Date of publication of application: 03.03.2010
(73) Proprietor: Telefonaktiebolaget LM Ericsson (publ), 164 83 Stockholm (SE)
(72) Inventor: HALLENSTÅL, Magnus, S-187 50 Täby (SE); RUNE, Göran, S-582 52 Linköping (SE); VIKBERG, Jari Tapio, S-153 38 Järna (SE); WITZEL, Andreas, 52134 Herzogenrath (DE); PEHRSSON, Arne, S-141 71 Huddinge (SE)
(74) Representative: Lind, Robert
(86) International application number: PCT/EP2007/056245
(87) International publication number: WO 2009/000313

(56) References cited:
- WO-A-00/41376
- CN-A- 1 983 945
- "Telecommunications and Internet Converged Services and Protocols for Advanced Networking (TISPAN); Fixed Mobile Convergence; Requirements Analysis; Draft ETSI TR 181 011" ETSI STANDARDS, LIS, SOPHIA ANTIPOLIS CEDEX, FRANCE, vol. TISPAN, no. V0.0.10, 1 January 2007 (2007-01-01), XP014036847 ISSN: 0000-0001

## Description

### Technical Field

The present invention relates to address provisioning in a mobile telecommunication system and in particular to the provisioning of network node addresses at user terminals.

### Background

Various abbreviations are used in the present specification. These are listed and explained at the end of the description.

Mobile CS services based on GSM and WCDMA radio access are widely used and allow telecommunication services to be obtained in almost all countries of the world with a single subscription. The number of CS subscribers continues to grow rapidly, in particular in densely populated countries such as India and China. This success is furthermore extended by the evolution of the classical MSC/VLR architecture into a softswitch solution which allows the use of a packet transport infrastructure for mobile CS services (by separating the MSC/VLR architecture into an MSC-S/VLR and one or more MGWs dedicated to media switching and format transformations on the bearer layer).

The 3GPP work item "Evolved UTRA and UTRAN" (started in summer 2006) has defined a Long-Term Evolution (LTE) concept that assures competitiveness of 3GPP-based access technology. LTE concept definition was preceded by an extensive evaluation phase of possible features and techniques in the RAN workgroups that concluded that the agreed system concepts can meet most of the requirements and no significant issue was identified in terms of feasibility. It is envisaged that LTE will use OFDM radio technology in the downlink and SC-FDMA for the uplink, allowing at least 100 Mbps peak data rate for downlink data rate and 50 Mbps for uplink data rate. LTE radio can operate in different frequency bands and is therefore very flexible for deployment in different regions of the world. The evolved radio access network is simplified as compared to, for example, the UTRAN and contains only E-UTRAN Node Bs or "eNodeBs". The eNodeBs of the LTE concept replace the Node Bs and the RNCs of the UTRAN. As such, the eNodeBs are connected directly to the core network nodes, as well as to each other (via the X2 interfaces).

In parallel to the RAN standardisation, 3GPP also drives a System Architecture Evolution (SAE) work item to develop an evolved core network. This new core network is also called Evolved Packet Core (EPC). The SAE core network is made up of core nodes. A proposal has been made to further split the core nodes into Control Plane (Mobile Management Entity MME) and User Plane Gateway (Serving Gateway and PDN Gateway) nodes as illustrated in Figure 1. In this document, the term Access Gateway (AGW) is used to depict both the Serving Gateway and the PDN Gateway nodes and functions. In the terminology currently used, AGW contains both User Plane Entity (UPE) and Inter-Access Anchor (IASA) functionality. The MME is connected to the eNodeB via the SI-MME interface and the AGW is connected to the eNodeB via the SI-U interface.

Common to both LTE and SAE is that only a Packet Switched (PS) domain will be specified, i.e. all services are to be supported via this domain. To date, LTE/SAE can be considered to be service "agnostic". It does not care about the nature of the data. It has been assumed that services will be facilitated by a service level core network, and in particular by the IP Multimedia Subsystem (IMS). The IMS would be connected to the AGW within the SAE, via the Gi interface (also referred to as an SGi interface in the SAE terminology).

ETSI TR 181 011 v.0.0.10 is background art with respect to Mobility Management Entities (MME).

It appears however that the assumption referred to in the preceding paragraph is not necessarily valid, due to the fact that some LTE/SAE network operators may not wish to implement an IMS network at all, or at least not simultaneously with LTE/SAE deployment. In this case, it becomes imperative that the SAE is able to handle or provide access to at least certain services, and in particular to the traditional CS type services such as voice calls.

### Summary

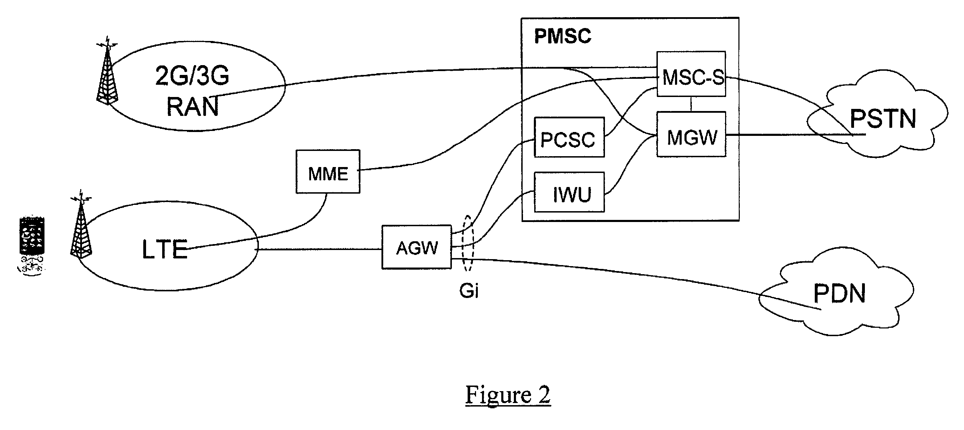

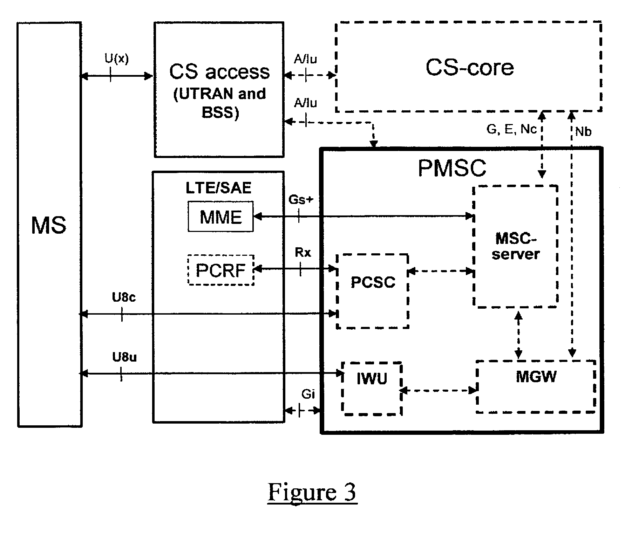

In order to satisfy this demand, proposals have been made to introduce an "interface" MSCNLR, referred to as a Packet MSC or PMSC, and connect this PMSC to the SAE core network. The PMSC is also reachable over the Gi interface meaning that it can be contacted using nominal IP-based communications. The resulting architecture is illustrated in Figure 2, whilst the resulting network interfaces are illustrated in Figure 3. Three alternative solutions are described below and the description will show the main differences between these solutions. The PMSC can appear to the "outside world" (and in particular to the PSTN) as a conventional MSCNLR.

There are a number of possible alternatives for the actual provision of CS services using the PMSC. A first alternative is called "CS fallback" and, as the name suggests, involves a MS performing MM procedures with the MME and either indirectly or directly with the MSC-SNLR, and switching or falling back to the 2G or 3G CS RAN when either a terminating CS call is received for the MS or the MS originates a CS service. According to this first solution, when a MS registers or attaches for PS-type services in the MME, it may also include an indication that it wishes to also be registered for CS-type services (referred to below merely as "CS services"). This registration is relayed from the MME to an MSC server (MSC-SNLR) within the PMSC. The MME, which is aware of the current location of the MS (i.e. the Tracking Area, TA and LTE cell), provides location updates to the MSC-S/VLR as needed.

A second solution is called CS over LTE Decoupled (CSoLTE-D) and involves transporting both MM and CM procedures between the MS and the PMSC using IP-based protocols via the LTE radio access network and the SAE core network user plane nodes such as the AGW. [Note that the MME remains responsible for managing mobility within the LTE RAN, only in this solution it does not communicate with the MSC-SNLR.]

A third solution is named CS over LTE Integrated (CSoLTE-I), and involves transporting the MM procedures between the MS and the PMSC via the MME as for the first solution but, instead of falling back to the 2G or 3G RAN for the CS services, the CM (Connection Management) signaling is transported over IP-based protocols between the MS and the PMSC using the LTE radio access network and the SAE CN node AGW. As with the first solution, a MS will register for CS services over LTE at PS attachment or registration, with the CS registration request being passed by the MME to the MSC-S/VLR.

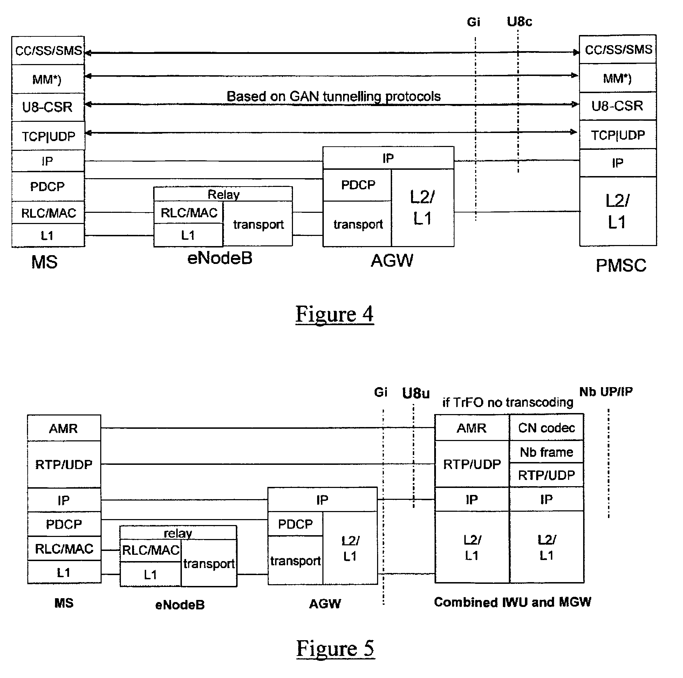

Figures 4 and 5 illustrate respectively the control plane protocol architecture and the user plane protocol architecture between the MS and the PMSC for the CSoLTE-D and CSoLTE-I solutions. The main difference between these solutions having regard to Figure 4 is that in the CSoLTE-D solution both MM and CM are transported between the MS and the PMSC using the U8c-interface. In the CSoLTE-I solution, only the CM is transported between the MS and the PMSC using the U8c-interface and the MM part is transported via the MME (and is so not shown in Figure 4).

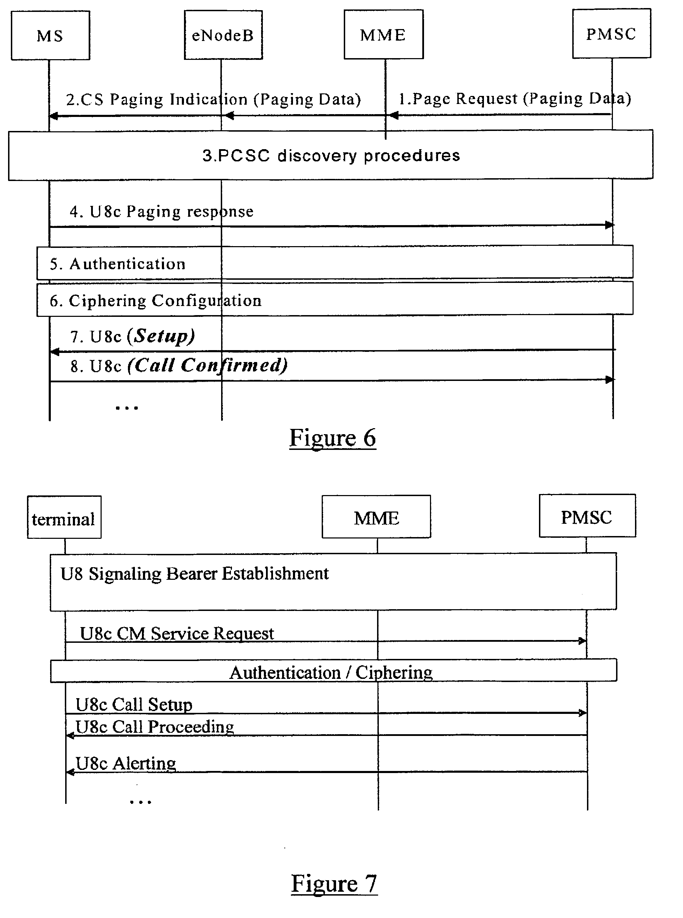

Considering further the third solution, when a MS receives a paging request related to a CS service from the MME and eNodeB, or seeks to initiate a CS service, it must contact the same PMSC that triggered the CS Paging Request and answer the CS Paging Request towards that node. This is needed as only that PMSC holds information about the mobile terminated transaction which triggered the CS Paging Request in the first place. To do this, the MS needs an IP address of the PMSC as CM related messages and CS Paging Responses must be sent via the AGW. This address could be obtained using a DNS look-up procedure, using the current location (e.g. TA) of the MS as the look-up key. Call setup procedures for the terminating call case and the originating call case are illustrated in Figures 6 and 7 respectively. This problem does not arise in the case of CSoLTE-D as the MS needs to initially select a PMSC, register to it using the U8c-interface protocols and then perform the Location Update towards that PMSC. This means that it is the MS that initially selects the PMSC and then uses the same PMSC for all signaling related to CS services over LTE. Conflict in PMSC selection does not arise.

It will be appreciated that, for CSoLTE-I, CS call setup is delayed by the need for the MS to obtain the address of the PMSC. It will also be understood that a terminating CS call setup will fail if the MS does not select the same PMSC as was initially selected by the MME for MM procedures. It is therefore desirable to pre-provision the PMSC address at the MS prior to CS call initiation.

According to a first aspect of the present invention there is provided a method of provisioning an address of a Packet Mobile Switching Centre at a Mobile Station, the Packet Mobile Switching Centre providing an interface between a packet switched domain to which the Mobile Station is attached, and a circuit switched service domain, and the packet switched domain comprising a Mobility Management Entity for handling Mobility Management in respect of the Mobile Station and for performing location updates with the Packet Mobile Switching Centre on behalf of the Mobile Station. The method comprises sending a Location Update request from the Mobility Management Entity to the Packet Mobile Switching Centre on behalf of the Mobile Station. In response, the Packet Mobile Switching Centre returns to the Mobility Management Entity a Location Update Accept containing an address of the Packet Mobile Switching Centre. The Mobility Management Entity forwards the address to the Mobile Station.

Embodiments of the present invention may significantly reduce call setup times for both originating and terminating calls. Moreover, PMSC selection will be consistent, avoiding conflicts where an MME selects one PMSC and a terminal selects another. The impact on existing and proposed network architectures is minimised.

Preferably, said Location Update Request is sent by the Mobility Management Entity in response to an Attach Request received by the Mobility Management Entity from the Mobile Station. The address may be forwarded from the Mobility Management Entity to the Mobile Station by including it in an Attach Accept.

Said Location Update Request may be sent by the Mobility Management Entity in response to a location update request received by the Mobility Management Entity from the Mobile Station. The location update request may relate to a Tracking Area, Location Area, or both. The step of forwarding said address from the Mobility Management Entity to the Mobile Station may comprise including said address in a location update acknowledge.

A particular application of the invention is where said packet switched domain comprises a LTE radio access network and a SAE core network, said Mobility Management Entity being present within the SAE core network. Where the Packet Mobile Switching Center comprises a Mobile Switching Centre Server, that server, together with at least one Media Gateway, may provide a Mobile Switching Centre softswitch. Preferably, Call Management signalling is transported from the Mobile Station to the Packet Mobile Switching Centre via a packet Access Gateway using the Packet Mobile Switching Centre address, with said Access Gateway being present within said SAE core network.

It is preferable that the Packet Mobile Switching Centre address is an IP address.

According to a second aspect of the present invention there is provided a Mobility Management Entity for handling Mobility Management in respect of a Mobile Station and for performing location updates with a Packet Mobile Switching Centre on behalf of the Mobile Station. The Mobility Management Entity is configured to send a Location Update request to a Packet Mobile Switching Centre on behalf of the Mobile Station, receive from the Packet Mobile Switching Centre a Location Update Accept containing an address of the Packet Mobile Switching Centre, and forward said address to the Mobile Station. The Mobility Management Entity according may be configured for use in a SAE core network.

According to a third aspect of the present invention there is provided a Mobile Station configured for use in a packet switched domain comprising a Packet Mobile Switching Centre for provisioning circuit switched services via the packet switched domain, the Mobile Station being further configured to receive from a Mobility Management Entity within the packet switched domain an address of the Packet Mobile Switching Centre and to use that address to communicate with the Packet Mobile Switching Centre in respect of circuit switched related Call Management procedures.

According to a fourth aspect of the present invention there is provided a Packet Mobile Switching Centre configured for providing an interface between a packet switched domain and a circuit switched service domain. The Packet Mobile Switching Centre is configured to receive a Location Update request from a Mobility Management Entity in respect of a Mobile Station, and return to the Mobility Management Entity a Location Update Accept containing an address of the Packet Mobile Switching Centre, wherein said address is used by the Mobile station to communicate with the Packet Mobile Switching Centre in respect of circuit switched related Call Management procedures. The Packet Mobile Switching Centre may be configured for use within a SAE core network.

According to a fifth aspect of the present invention there is provided a method of provisioning an address of a Packet Mobile Switching Centre at a Mobile Station, the Packet Mobile Switching Centre providing an interface between a packet switched domain to which the Mobile Station is attached, and a circuit switched service domain, and the packet switched domain comprising a Mobility Management Entity for handling Mobility Management in respect of the Mobile Station and for performing location updates with the Packet Mobile Switching Centre on behalf of the Mobile Station, the method comprising sending an address of the Packet Mobile Switching Centre to the Mobility Management Entity, and forwarding said address from the Mobility Management Entity to the Mobile Station.

### Brief Description of the Drawings

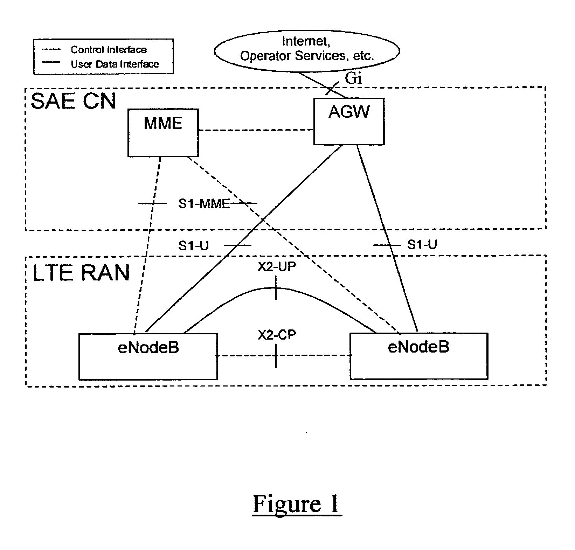

Figure 1 illustrates schematically the LTE and SAE network structures;
Figure 2 illustrates schematically the addition of a PMSC coupled to the SAE core network structure of Figure 1;
Figure 3 shows schematically various interfaces associated with the PMSC;
Figure 4 shows schematically the control plane protocol architecture between the MS and the PMSC for the CSoLTE-D and CSoLTE-I solutions;
Figure 5 shows schematically the user plane protocol architecture between the MS and the PMSC for the CSoLTE-D and CSoLTE-I solutions;
Figure 6 shows call setup procedures for a terminating call case according to the prior art;
Figure 7 shows call setup procedures for an originating call case according to the prior art;
Figure 8 shows signaling procedures associated with provision of a PMSC IP address to a MS at initial attach; and
Figures 9 and 10 show signaling procedures associated with provision of a PMSC IP address to a MS during various mobility related registration scenarios.

### Detailed Description

Considering now an expected future cellular telecommunications system, a LTE radio access network will comprise a number of eNodeBs connected to and communicating with nodes of a SAE core network. In particular, these nodes communicate with a Mobility Management Entity node (MME) for Mobility Management (MM) purposes. The MME controls and manages the eNodeBs of the LTE cells and the tracking areas TAs. TAs are handled and controlled by the MME. Within an LTE cell, the eNodeB will be able to establish and maintain contact with visiting MSs via the air interface. The SAE core network further comprises an Access Gateway Node (AGW), which communicates with the MME and with other entities in the same network and in other networks. The AGW 42 is an interface node connecting other Packet Data Networks (PDN), such as the Internet, to the SAE core network. The MME of the SAE corresponds functionally to an Service GPRS Support Node SGSN (without user plane handling) and is therefore adapted to communicate with and manage eNodeBs of the LTE radio access network.

As has been discussed above, it is desirable to enable access to CS services for a UE while the MS is connected to a LTE radio access network which provides only PS access. In order to facilitate this, a new node, referred to here as the PMSC, is introduced and connected to the SAE core network. The PMSC comprises an MSC-SNLR (designated in the Figures by "MSC-S") which, in combination with a MGW, operates substantially as an MSC softswitch. The PMSC also comprises two new logical functions, namely an IWU and a PCSC. The role of the IWU is to perform inter working of different packet/framing formats of RTP data, and is coupled to the AGW at the bearer level. For the CSoLTE-I solution, the PCSC handles the Connection Management (CM) procedures, CS Paging Responses and the new U8c interface.

A communication connection is established between the MME and the MSC-SNLR. This could use, for example, MTP routing procedures. Alternatively IP could be used, but it is important to note that in this case it is likely that the IP address to the PMSC used by the MME will be different from that used by an MS communicating with the PMSC. The MME is therefore able to send Location Updates concerning MSs registered within the MME. Further, a terminating call for a visiting MS will be handled by the MSC-S/VLR, which generates and sends a Page Request message to the MS via the MME and eNodeB. The LTE location information provided to the MSC-S/VLR is typically Location Area which normally will be derived from Tracking Area TA identity.

This discussion is concerned with the scenario identified above as CSoLTE-I and which involves transporting the MM procedures between the MS and the PMSC via the MME, and the MME initially selecting one PMSC for the MM procedures for a particular MS, whilst transporting CM procedures and CS Paging responses over IP-based protocols between the MS and the PMSC using the LTE radio access network and the AGW. It is proposed here that, when registering a MS for CS services over LTE, the MME selects a certain PMSC (using some criteria not discussed further here). This means that there is one PMSC that has knowledge of the MS and to which any incoming CS call will be routed. All outgoing calls shall also be initiated via this PMSC. The PMSC will also reserve local IP resources for the handling of the U8c-interface (e.g. CM procedures and CS Paging responses) and return the address information of the reserved IP resources to the MME and then further to the MS.

When the MS responds to a page (for a terminating call) or initiates an originating call using a tunneling mechanism over LTE, the MS needs to signal "towards" the same PMSC as the MME has selected. In order to ensure that there is a consistent selection of the PMSC, the MME provides the PMSC's (IP) address to the MS in all cases when the MS is registered (and the user has subscribed) for CS services over LTE, or at least in all cases when the MS is registered for CS services over LTE and the PMSC address has changed. This will occur at initial attach to the MME, and may occur as well during mobility. Details of the MS registration procedures are not considered in detail here, but this will be readily apparent to the skilled person.

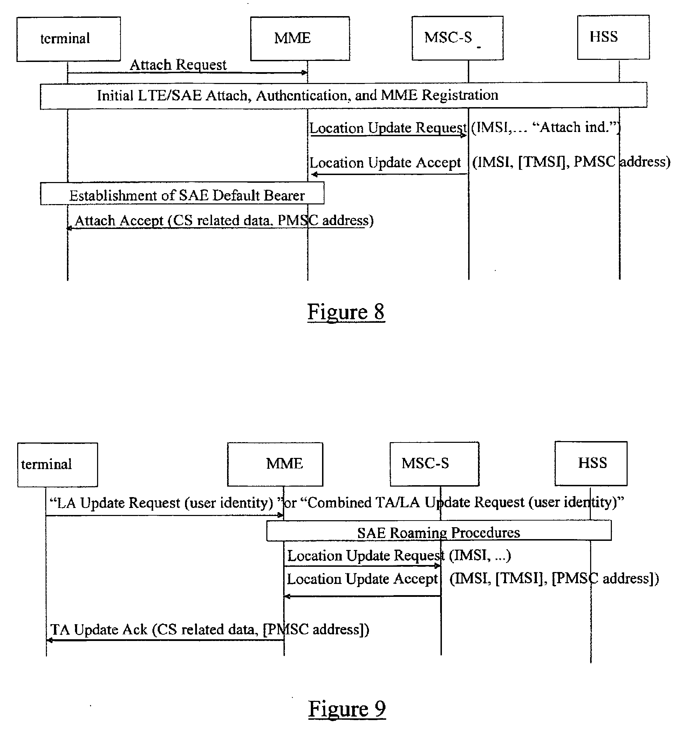

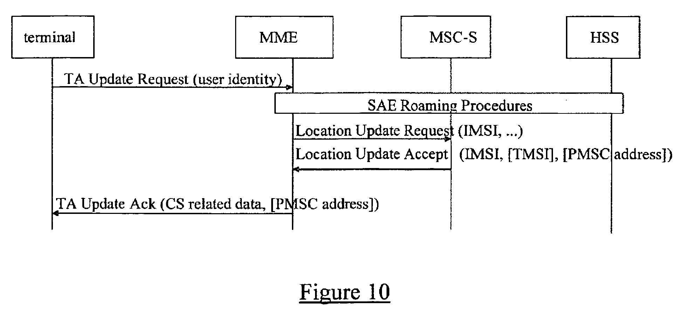

The first case when the MS is registered for CS services over LTE is at initial attach to the MME, where the MME supports the Gs+ interface. The Gs+ interface will be based on the Gs interface, which is between SGSN and MSC or SGSN and MSC-S. In this case the MS receives the PMSC address as a result of the attach procedure, illustrated further in Figure 8. Once the MS is attached to LTE/SAE, changes in the location of the MS may be reported to the CS domain (PMSC), at least in certain cases. Mobility related registration can be handled either by the MS or by the MME, i.e. the registration can be based on LA Updates (if inherent Location Areas will be supported in LTE), TA Updates, or combined LA/TA Updates. Regardless of which method is being used, the PMSC provides the MS with the PMSC (IP) address when registration is concluded (at least if it has changed). Figures 9 and 10 illustrate signalling associated with a number of different mobility related registration scenarios. [In practice, both approaches may be implemented in parallel.]

It will be appreciated by the person of skill in the art that various modifications may be made to the above described embodiments without departing from the scope of the present invention. For example, it is possible that the MME can learn the IP address of the PMSC as a result of a first location update procedure for a given MS, and can thereafter provide this to further MSs as required. Of course, a mechanism must be provided for notifying the MME of a change in the PMSC address.

### Abbreviations

- 3GPP: 3rd Generation Partnership Project
- AGW: Access Gateway
- AS: Application Server
- CM: Connection Management
- CS: Circuit Switched
- CSoLTE: CS Services over LTE Radio Access
- DNS: Domain Name Server
- DTM: Dual Transfer Mode
- eMSC-S: evolved MSC-S
- E-UTRAN: Evolved UTRAN
- eNodeB: E-UTRAN Node B
- FDMA: Frequency Division Multiple Access
- Gi: Gi-Reference Point
- Gs+: enhanced Gs-Reference Point
- GSM: Global System for Mobile Communications
- IASA: Inter-Access Anchor
- IMS: IP Multimedia Subsystem
- IWU: Interworking Unit
- LA: Location Area
- LAI: Location Area Identifier
- LCS: Location Service
- LTE: Long Term Evolution
- MGW: Media Gateway
- MM: Mobility Management
- MME: Mobility Management Entity
- MMTel: Multimedia Telephony
- MS: Mobile Station
- MSC: Mobile Switching Centre
- MSC-S: Mobile Switching Centre Server
- MSS: Mobile Softswitch Solution
- OFDM: Orthogonal Frequency Division Multiplexing
- PCRF: Policy Control and Charging Rules Function
- PCSC: Packet CS Controller
- PMSC: Packet MSC
- PS: Packet Switched
- PSTN: Public Switched Telephone Network
- RAN: Radio Access Network
- SA: Service Area
- SAE: System Architecture Evolution
- SAI: Service Area Identifier
- SC-FDMA: Single Carrier FDMA
- SGSN: Serving GPRS Support Node
- SMS: Short Message Service
- SS: Supplementary Service
- TA: Tracking Area
- UMTS: Universal Mobile Telecommunications System
- UP: User Plane
- UPE: User Plane Entity
- UTRA: Universal Terrestrial Radio Access
- UTRAN: UMTS Terrestrial Radio Access Network
- VLR: Visitor Location Register
- WCDMA: Wideband Code Division Multiple Access

## Claims

1. A method of provisioning an address of a Packet Mobile Switching Centre at a Mobile Station, the Packet Mobile Switching Centre providing an interface between a packet switched domain to which the Mobile Station is attached, and a circuit switched service domain, and the packet switched domain comprising a Mobility Management Entity for handling Mobility Management in respect of the Mobile Station and for performing location updates with the Packet Mobile Switching Centre on behalf of the Mobile Station, the method comprising:
sending a Location Update request from the Mobility Management Entity to the Packet Mobile Switching Centre on behalf of the Mobile Station;
returning from the Packet Mobile Switching Centre to the Mobility Management Entity a Location Update Accept containing an address of the Packet Mobile Switching Centre; and
forwarding said address from the Mobility Management Entity to the Mobile Station.

2. A method according to claim 1, wherein said Location Update Request is sent by the Mobility Management Entity in response to an Attach Request received by the Mobility Management Entity from the Mobile Station.

3. A method according to claim 2, wherein the step of forwarding said address from the Mobility Management Entity to the Mobile Station comprises including said address in an Attach Accept.

4. A method according to claim 1, wherein said Location Update Request is sent by the Mobility Management Entity in response to a location update request received by the Mobility Management Entity from the Mobile Station.

5. A method according to claim 4, wherein said location update request relates to a Tracking Area, Location Area, or both.

6. A method according to claim 4 or 5, wherein the step of forwarding said address from the Mobility Management Entity to the Mobile Station comprises including said address in a location update acknowledge.

7. A method according to any one of the preceding claims, wherein said packet switched domain comprises a LTE radio access network and a SAE core network, said Mobility Management Entity being present within the SAE core network.

8. A method according to any one of the preceding claims, said Packet Mobile Switching Centre comprising a Mobile Switching Centre Server, said Location Update being received within the Packet Mobile Switching Centre by the Mobile Switching Centre Server, and the Mobile Switching Centre Server returning said Location Update Accept to the Mobility Management Entity.

9. A method according claim 8, wherein said Mobile Switching Centre server, together with at least one Media Gateway, provides a Mobile Switching Centre softswitch.

10. A method according to any one of the preceding claims, wherein Call Management signalling is transported from the Mobile Station to the Packet Mobile Switching Centre via a packet Access Gateway using the Packet Mobile Switching Centre address.

11. A method according to claim 10 when appended to claim 7, said Access Gateway being present within said SAE core network.

12. A method according to any one of the preceding claims, wherein the Packet Mobile Switching Centre address is an IP address.

13. A Mobility Management Entity for handling Mobility Management in respect of a Mobile Station and for performing location updates with a Packet Mobile Switching Centre on behalf of the Mobile Station, the Mobility Management Entity being configured to:
send a Location Update request to said Packet Mobile Switching Centre on behalf of the Mobile Station;
receive from the Packet Mobile Switching Centre a Location Update Accept containing an address of the Packet Mobile Switching Centre; and
forward said address to the Mobile Station.

14. A Mobility Management Entity according to claim 12 and being configured for use in a SAE core network.

15. A Mobile Station configured for use in a packet switched domain comprising a Packet Mobile Switching Centre for provisioning circuit switched services via the packet switched domain, the Mobile Station being further configured to receive from a Mobility Management Entity within the packet switched domain an address of the Packet Mobile Switching Centre and to use that address to communicate with the Packet Mobile Switching Centre in respect of circuit switched related Call Management procedures.

16. A Packet Mobile Switching Centre configured to provide an interface between a packet switched domain and a circuit switched service domain, the Packet Mobile Switching Centre being further configured to:
receive a Location Update request from a Mobility Management Entity in respect of a Mobile Station; and
return to the Mobility Management Entity a Location Update Accept containing
an address of the Packet Mobile Switching Centre,
wherein said address is used by the Mobile station to communicate with the Packet Mobile Switching Centre in respect of circuit switched related Call Management procedures.

17. A Packet Mobile Switching Centre according to claim 16 and configured for use within a SAE core network.

18. A method of provisioning an address of a Packet Mobile Switching Centre at a Mobile Station, the Packet Mobile Switching Centre providing an interface between a packet switched domain to which the Mobile Station is attached, and a circuit switched service domain, and the packet switched domain comprising a Mobility Management Entity for handling Mobility Management in respect of the Mobile Station and for performing location updates with the Packet Mobile Switching Centre on behalf of the Mobile Station, the method comprising:
sending an address of the Packet Mobile Switching Centre to the Mobility Management Entity; and
forwarding said address from the Mobility Management Entity to the Mobile Station.

## Patentansprüche

1. Verfahren zum Bereitstellen einer Adresse einer Paket-Mobilvermittlung an einer Mobilstation, wobei die Paket-Mobilvermittlung eine Schnittstelle bereitstellt zwischen einer paketvermittelten Domäne, bei der die Mobilstation angemeldet ist, und einer leitungsvermittelten Dienstdomäne, und die paketvermittelte Domäne eine Mobilitätsmanagement-Entität umfasst zum Handhaben von Mobilitätsmanagement bezüglich der Mobilstation und zum Ausführen von Standortupdates mit der Paket-Mobilvermittlung zugunsten der Mobilstation, wobei das Verfahren umfasst:
Senden einer Standortupdateanforderung von der Mobilitätsmanagement-Entität an die Paket-Mobilvermittlung zugunsten der Mobilstation;
Zurückleiten einer Standortupdateannahme, die eine Adresse der Paket-Mobilvermittlung enthält, von der Paket-Mobilvermittlung an die Mobilitätsmanagement-Entität; und
Weiterleiten der Adresse von der Mobilitätsmanagement-Entität an die Mobilstation.

2. Verfahren nach Anspruch 1, worin die Standortupdateanforderung durch die Mobilitätsmanagement-Entität als Antwort auf eine Anmeldungsanforderung gesendet wird, die durch die Mobilitätsmanagement-Entität von der Mobilstation empfangen wird.

3. Verfahren nach Anspruch 2, worin der Schritt des Weiterleitens der Adresse von der Mobilitätsmanagement-Entität an die Mobilstation das Einschließen der Adresse in eine Anmeldungsannahme umfasst.

4. Verfahren nach Anspruch 1, worin die Standortupdateanforderung durch die Mobilitätsmanagement-Entität als Antwort auf eine Standortupdateanforderung gesendet wird, die durch die Mobilitätsmanagement-Entität von der Mobilstation empfangen wird.

5. Verfahren nach Anspruch 4, worin die Standortupdateanforderung einen Trackingbereich, einen Standortbereich oder beide betrifft.

6. Verfahren nach Anspruch 4 oder 5, worin der Schritt des Weiterleitens der Adresse von der Mobilitätsmanagement-Entität an die Mobilstation das Einschließen der Adresse in eine Standortupdatebestätigung umfasst.

7. Verfahren nach einem der vorhergehenden Ansprüche, worin die paketvermittelte Domäne ein LTE-Funkzugangsnetz und ein SAE-Kernnetz umfasst, wobei die Mobilitätsmanagement-Entität innerhalb des SAE-Kernnetzes vorhanden ist.

8. Verfahren nach einem der vorhergehenden Ansprüche, wobei die Paket-Mobilvermittlung einen Mobilvermittlungsserver umfasst, das Standortupdate innerhalb der Paket-Mobilvermittlung durch den Mobilvermittlungsserver empfangen wird und der Mobilvermittlungsserver die Standortupdateannahme an die Mobilitätsmanagement-Entität zurückleitet.

9. Verfahren nach Anspruch 8, worin der Mobilvermittlungsserver zusammen mit mindestens einem Media-Gateway einen Mobilvermittlungs-Softswitch bereitstellt.

10. Verfahren nach einem der vorhergehenden Ansprüche, worin Verbindungsmanagementsignalisierung von der Mobilstation über ein Paketzugangs-Gateway unter Verwendung der Paket-Mobilvermittlungsadresse an die Paket-Mobilvermittlung transportiert wird.

11. Verfahren nach Anspruch 10, wenn an Anspruch 7 angehängt, worin das Zugangs-Gateway innerhalb des SAE-Kernnetzes vorhanden ist.

12. Verfahren nach einem der vorhergehenden Ansprüche, worin die Paket-Mobilvermittlungsadresse eine IP-Adresse ist.

13. Mobilitätsmanagement-Entität zum Handhaben von Mobilitätsmanagement bezüglich einer Mobilstation und zum Ausführen von Standortupdates mit einer Paket-Mobilvermittlung zugunsten der Mobilstation, wobei die Mobilitätsmanagement-Entität konfiguriert ist zum:
Senden einer Standortupdateanforderung an die Paket-Mobilvermittlung zugunsten der Mobilstation;
Empfangen einer Standortupdateannahme, die eine Adresse der Paket-Mobilvermittlung enthält, von der Paket-Mobilvermittlung; und
Weiterleiten der Adresse an die Mobilstation.

14. Mobilitätsmanagement-Entität nach Anspruch 12 und zur Verwendung in einem SAE-Kernnetz konfiguriert.

15. Mobilstation, konfiguriert zur Verwendung in einer paketvermittelten Domäne, die eine Paket-Mobilvermittlung zum Provisionieren von leitungsvermittelten Diensten über die paketvermittelte Domäne umfasst, wobei die Mobilstation außerdem dazu konfiguriert ist, von einer Mobilitätsmanagement-Entität innerhalb der paketvermittelten Domäne eine Adresse der Paket-Mobilvermittlung zu empfangen und diese Adresse zu verwenden, um mit der Paket-Mobilvermittlung bezüglich Leitungsvermittlung betreffender Verbindungsmanagementprozeduren zu kommunizieren.

16. Paket-Mobilvermittlung, konfiguriert zum Bereitstellen einer Schnittstelle zwischen einer paketvermittelten Domäne und einer leitungsvermittelten Dienstdomäne, wobei die Paket-Mobilvermittlung außerdem konfiguriert ist zum:
Empfangen einer Standortupdateanforderung von einer Mobilitätsmanagement-Entität bezüglich einer Mobilstation; und
Zurückleiten einer Standortupdateannahme, die eine Adresse der Paket-Mobilvermittlung enthält, an die Mobilitätsmanagement-Entität,
worin die Adresse von der Mobilstation verwendet wird, um mit der Paket-Mobilvermittlung bezüglich Leitungsvermittlung betreffender Verbindungsmanagementprozeduren zu kommunizieren.

17. Paket-Mobilvermittlung nach Anspruch 16 und zur Verwendung innerhalb eines SAE-Kernnetzes konfiguriert.

18. Verfahren zum Provisionieren einer Adresse einer Paket-Mobilvermittlung an einer Mobilstation, wobei die Paket-Mobilvermittlung eine Schnittstelle zwischen einer paketvermittelten Domäne, bei der die Mobilstation angemeldet ist, und einer leitungsvermittelten Dienstdomäne bereitstellt, und die paketvermittelte Domäne eine Mobilitätsmanagement-Entität zum Handhaben von Mobilitätsmanagement bezüglich der Mobilstation und zum Ausführen von Standortupdates mit der Paket-Mobilvermittlung zugunsten der Mobilstation umfasst, wobei das Verfahren umfasst:
Senden einer Adresse der Paket-Mobilvermittlung an die Mobilitätsmanagement-Entität; und
Weiterleiten der Adresse von der Mobilitätsmanagement-Entität an die Mobilstation.

## Revendications

1. Procédé destiné à configurer une adresse d'un centre de commutation des services mobiles en mode paquet au niveau d'une station mobile, le centre de commutation des services mobiles en mode paquet fournissant une interface entre un domaine à commutation de paquets auquel la station mobile est rattachée et un domaine de service à commutation de circuits, et le domaine à commutation de paquets comprenant une entité de gestion de la mobilité pour gérer la mobilité relativement à la station mobile et pour mettre en oeuvre des mises à jour de localisation avec le centre de commutation des services mobiles en mode paquet au nom de la station mobile, le procédé comprenant les étapes ci-dessous consistant à :
envoyer un message de demande de mise à jour de localisation, de l'entité de gestion de la mobilité au centre de commutation des services mobiles en mode paquet, au nom de la station mobile ;
renvoyer, du centre de commutation des services mobiles en mode paquet à l'entité de gestion de la mobilité, un message d'acceptation de mise à jour de localisation contenant une adresse du centre de commutation des services mobiles en mode paquet ; et
acheminer ladite adresse de l'entité de gestion de la mobilité à la station mobile.

2. Procédé selon la revendication 1, dans lequel ladite demande de mise à jour de localisation est envoyée par l'entité de gestion de la mobilité en réponse à une demande de rattachement reçue par l'entité de gestion de la mobilité à partir de la station mobile.

3. Procédé selon la revendication 2, dans lequel l'étape consistant à acheminer ladite adresse de l'entité de gestion de la mobilité à la station mobile, comprend en outre l'étape consistant à inclure ladite adresse dans un message d'acceptation de rattachement.

4. Procédé selon la revendication 1, dans lequel ladite demande de mise à jour de localisation est envoyée par l'entité de gestion de la mobilité en réponse à une demande de mise à jour de localisation reçue par l'entité de gestion de la mobilité à partir de la station mobile.

5. Procédé selon la revendication 4, dans lequel ladite demande de mise à jour de localisation est connexe à une zone de suivi, à une zone de localisation, ou à ces deux zones.

6. Procédé selon la revendication 4 ou 5, dans lequel l'étape consistant à acheminer ladite adresse, de l'entité de gestion de la mobilité à la station mobile, comprend l'étape consistant à inclure ladite adresse dans un message d'accusé de réception de mise à jour de localisation.

7. Procédé selon l'une quelconque des revendications précédentes, dans lequel ledit domaine à commutation de paquets comporte un réseau d'accès radio LTE et un réseau fédérateur SAE, ladite entité de gestion de la mobilité étant présente dans le réseau fédérateur SAE.

8. Procédé selon l'une quelconque des revendications précédentes, dans lequel ledit centre de commutation des services mobiles en mode paquet comporte un serveur de centre de commutation des services mobiles, et dans lequel ledit message de mise à jour de localisation est reçu dans le centre de commutation des services mobiles en mode paquet par le serveur de centre de commutation des services mobiles, et le serveur de centre de commutation des services mobiles renvoie ledit message d'acceptation de mise à jour de localisation à l'entité de gestion de la mobilité.

9. Procédé selon la revendication 8, dans lequel ledit serveur de centre de commutation des services mobiles, avec au moins une passerelle multimédia, offre un commutateur logiciel de centre de commutation mobile.

10. Procédé selon l'une quelconque des revendications précédentes, dans lequel la signalisation de gestion d'appels est transportée de la station mobile au centre de commutation des services mobiles en mode paquet via une passerelle d'accès par paquet en faisant appel à l'adresse de centre de commutation des services mobiles en mode paquet.

11. Procédé selon la revendication 10, lorsque dépendante de la revendication 7, dans lequel ladite passerelle d'accès est présente dans ledit réseau fédérateur SAE.

12. Procédé selon l'une quelconque des revendications précédentes, dans lequel l'adresse de centre de commutation des services mobiles en mode paquet est une adresse IP.

13. Entité de gestion de la mobilité destinée à gérer la mobilité relativement à une station mobile et à mettre en oeuvre des mises à jour de localisation avec un centre de commutation des services mobiles en mode paquet au nom de la station mobile, l'entité de gestion de la mobilité étant configurée de manière à :
envoyer une demande de mise à jour de localisation audit centre de commutation des services mobiles en mode paquet au nom de la station mobile ;
recevoir à partir du centre de commutation des services mobiles en mode paquet un message d'acceptation de mise à jour de localisation contenant une adresse du centre de commutation des services mobiles en mode paquet ; et
acheminer ladite adresse à la station mobile.

14. Entité de gestion de la mobilité selon la revendication 12, laquelle est configurée de manière à être utilisée dans un réseau fédérateur SAE.

15. Station mobile configurée de manière à être utilisée dans un domaine à commutation de paquets comprenant un centre de commutation des services mobiles en mode paquet pour configurer des services à commutation de circuits via le domaine à commutation de paquets, la station mobile étant en outre configurée de manière à recevoir, à partir d'une entité de gestion de la mobilité dans le domaine à commutation de paquets, une adresse du centre de commutation des services mobiles en mode paquet et à utiliser cette adresse pour communiquer avec le centre de commutation des services mobiles en mode paquet dans le cadre de procédures de gestion des appels connexes aux commutations de circuits.

16. Centre de commutation des services mobiles en mode paquet configuré pour fournir une interface entre un domaine à commutation de paquets et un domaine de service à commutation de circuits, le centre de commutation des services mobiles en mode paquet étant en outre configuré de manière à :
recevoir une demande de mise à jour de localisation en provenance d'une entité de gestion de la mobilité relativement à une station mobile ; et
renvoyer à l'entité de gestion de la mobilité un message d'acceptation de mise à jour de localisation contenant une adresse du centre de commutation des services mobiles en mode paquet ;
dans laquelle ladite adresse est utilisée par la station mobile pour communiquer avec le centre de commutation des services mobiles en mode paquet dans le cadre de procédures de gestion des appels connexes aux commutations de circuits.

17. Centre de commutation des services mobiles en mode paquet selon la revendication 16, configuré en vue d'être utilisé dans un réseau fédérateur SAE.

18. Procédé destiné à configurer une adresse d'un centre de commutation des services mobiles en mode paquet au niveau d'une station mobile, le centre de commutation des services mobiles en mode paquet fournissant une interface entre un domaine à commutation de paquets auquel la station mobile est rattachée et un domaine de service à commutation de circuits, et le domaine à commutation de paquets comprenant une entité de gestion de la mobilité en vue de gérer la mobilité relativement à la station mobile et de mettre en oeuvre des mises à jour de localisation avec le centre de commutation des services mobiles en mode paquet au nom de la station mobile, le procédé comprenant les étapes ci-dessous consistant à :
envoyer une adresse du centre de commutation des services mobiles en mode paquet à l'entité de gestion de la mobilité ; et
acheminer ladite adresse de l'entité de gestion de la mobilité à la station mobile.
